# EUROPEAN PATENT APPLICATION

(11) **EP 1 344 697 A2**
(43) Date of publication of application: **17.09.2003**
(21) Application number: 03250817.8
(22) Date of filing: 10.02.2003
(51) Int. Cl.: B60R 22/195

(54) **Seatbelt pretensioner for vehicle seats**

(30) Priority: 21.02.2002 JP 2002044792
(71) Applicant: ARACO KABUSHIKI KAISHA, Toyota-shi, Aichi-ken (JP)
(72) Inventor: Tatematsu, Kazuhisa, Nagoya-shi, Aichi-ken (JP); Inadome, Seiichiro, Toyota-shi, Aichi-ken (JP); Mitsuhashi, Atsutaka, Nishikamo-gun, Aichi-ken (JP); Akaike, Fumitoshi, Nisshin-shi, Aichi-ken (JP)
(74) Representative: Pratt, David Martin

(57) **Abstract**

Vehicle seats are taught that comprise a cushion frame (10) having a pair of frame elements (12) and a cylindrical connector member (14) that interconnects the frame elements. At least one seatbelt pretensioning device (20, 40) preferably exerts a traction force on a seatbelt when the vehicle is subjected to an impact. The pretensioning device may include a drive force generating means (22, 42) and a movable member (26, 46). The drive force generating means and the movable member are preferably received within a cavity of the connector member. The movable member is preferably arranged and constructed to move along the connector member when the drive force generating means is actuated.

## Description

This application claims priority to Japanese Patent Application Serial Number 2002-044792, the contents of which are incorporated herein by reference.

The present invention relates to vehicle seats that have a seatbelt pretensioning device for exerting a traction force on a seatbelt when a vehicle is subjected to an impact or shock.

A vehicle seat having a seatbelt pretensioning device is taught, for example, by U.S. Patent Number 6,164,700.
Typically, a vehicle seatbelt is wound around a winding shaft and is received within an automatic locking retractor. The automatic locking retractor can lock the winding shaft to prevent rewinding of the seatbelt when the vehicle is subjected to an impact. Thus, the occupant is restrained when the vehicle is subjected to an impact. However, if slack exists in the seatbelt when the winding shaft is locked, the occupant can not be sufficiently restrained. If the seatbelt is pretensioned and has no slack when the winding shaft is locked, it is expected that the occupant will be reliably restrained. The seatbelt pretensioning device exerts a traction force on the seatbelt before the winding shaft of the seatbelt is locked.

The known seatbelt pretensioning device includes an actuator cylinder, which cylinder is disposed on a side surface of a cushion frame of a vehicle seat cushion. The actuator cylinder contains a gas generator and a piston that is linked to a seatbelt buckle. When the vehicle is subjected to an impact, the gas generator is actuated, thereby generating high pressure gas in the actuator cylinder. The high pressure gas moves the piston, thereby pulling back the seatbelt buckle. As a result, a traction force is exerted on the seatbelt, thereby tensioning or tightening the seatbelt, so that the restraining force applied to the occupant is effectively increased.

However, because the seatbelt pretensioning device is disposed on the side surface of the cushion frame, it may laterally project from the seat cushion. Therefore, the design of the vehicle seat must be altered so such that the seatbelt pretensioning device does not interfere with any components disposed around the vehicle seat. As a result, design freedom of the vehicle seat is remarkably limited. In addition, it is necessary to cover the seatbelt pretensioning device in order to avoid an undesirable appearance of the vehicle seat.

It is, accordingly, one objéct of the present teachings to provide improved vehicle seats having a seatbelt pretensioning device.

For example, in one aspect of the present teachings, vehicle seats are taught that comprise a cushion frame having a pair of frame elements and a cylindrical connector member that interconnects the frame elements. At least one seatbelt pretensioning device preferably exerts a traction force on a seatbelt when the vehicle is subjected to an impact. The pretensioning device preferably comprises a drive force generating means and a movable member. The drive force generating means and the movable member may be received within a cavity of the connector member. The movable member is preferably arranged and constructed to move along the connector member when the drive force generating means is actuated.

In such vehicle seats, because the drive force generating means and the movable member of the seatbelt pretensioning device are incorporated or embedded within the connector member, the seatbelt pretensioning device is disposed within the vehicle seat and does not project therefrom. Therefore, the seatbelt pretensioning device will not interfere with any components disposed around the vehicle seat. As a result, the vehicle seat can be freely designed. In addition, the seatbelt pretensioning device thus disposed will not detract from the appearance of the vehicle seat because it is not exposed.

Other objects, features and advantage of the present invention will be ready understood after reading the following detailed description together with the accompanying drawings and the claims.
FIG. 1 is a perspective view illustrating a pretensioning device according to a first embodiment of the present teachings, in which the device is attached to a cushion frame of a vehicle seat cushion;
FIG. 2 is a side view of the cushion frame that includes the pretensioning device;
FIG. 3 is a cross-sectional view taken along line III-III shown in FIG. 2; and
FIG. 4 is a cross-sectional view similar to FIG. 3, which view illustrates a pretensioning device according to a second embodiment of the present teachings.

In one embodiment of the present teachings, a vehicle seat may comprise a cushion frame having a pair of frame elements and a cylindrical connector member that interconnects the frame elements. At least one seatbelt pretensioning device preferably exerts a traction or tightening force on a seatbelt when the vehicle is subjected to an impact. The seatbelt pretensioning device preferably comprises a gas generator and a movable member. Preferably, the gas generator and the movable member may be received within a cavity of the connector member. Further, the movable member may preferably be arranged and constructed to move along the connector member when the gas generator is actuated.

Optionally, the movable member may be arranged and constructed to move inwardly when the gas generator is actuated. The movable member may be designed to pull one end of the seatbelt when the movable member moves inwardly. For example, the movable member may be coupled to one end of the seatbelt, so that the seatbelt may be pulled in one direction when the movable member moves inwardly..

Optionally, the at least one seatbelt pretensioning device may comprise first and second seatbelt pretensioning devices. Preferably, the first and second seatbelt pretensioning devices may be positioned adjacent to the respective ends of the connector member. In this case, the movable members of the devices may preferably be arranged and constructed to inwardly and oppositely move when the gas generators are actuated. Preferably, the movable members may be designed to pull both ends of the seatbelt when the movable members inwardly and oppositely move. For example, the movable members may be coupled to the respective ends of the seatbelt, so that the seatbelt will be pulled in opposite directions when the movable members inwardly and oppositely move.

For example, the gas generator preferably can generate relatively high pressure gas. In addition, the movable member may be a piston that can move along the connector member. The piston may be arranged and constructed to move inwardly when the gas generator generates high pressure gas.

In another optional embodiment, the seatbelt pretensioning device may further comprise an additional actuator cylinder that is disposed within the cavity of the connector member. The gas generator and the movable member preferably may be received within the actuator cylinder.

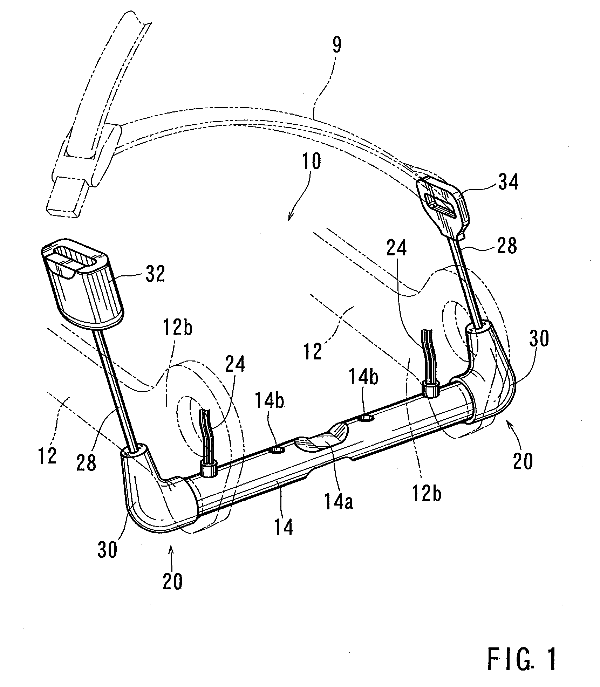

Two detailed representative embodiments of the present teachings will now be described in further detail with reference to FIGS. 1 to 4.

### First Detailed Representative Embodiment

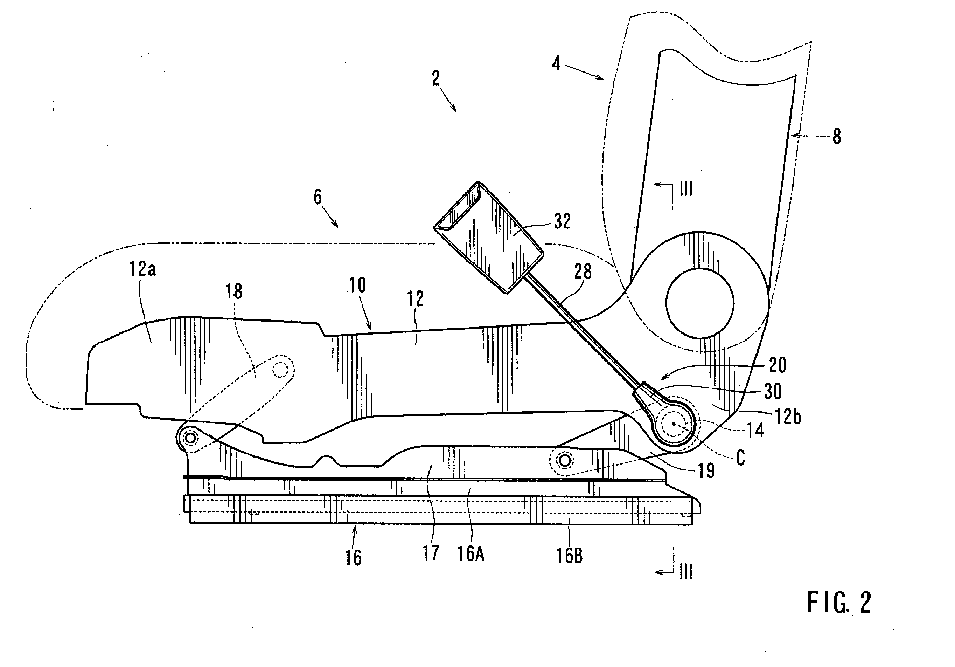

The first detailed representative embodiment will now described with reference to FIGS. 1 to 3. A vehicle seat 2 of this embodiment generally comprises a seat back 4 and a seat cushion 6. The seat back and the seat cushion are respectively supported by a seat back frame 8 and a cushion frame 10. As shown in FIGS. 1 and 2, the cushion frame 10 includes a pair of opposing elongated plate-shaped members or frame elements 12 that extend in the lengthwise direction of the vehicle seat 2 and a cylindrical metal connector member 14 that extends in the crosswise direction of the vehicle seat 2. Each of the frame elements 12 has a front portion 12a and a rear portion 12b. Rear portions 12b of the frame elements 12 are interconnected by the connector member 14, thereby defining the cushion frame 10 as a unit. In addition, front and rear lift arms 18, 19 are pivotally attached to the respective ends of the front and rear portions 12a, 12b of each of the frame elements 12. For example, as shown in FIG. 2, the rear lift arm 19 may be arranged such that it may pivot around a longitudinal axis C of the connector member 14.

The cushion frame 10 thus constructed is seated on a pair of slide rail assemblies 16 that are disposed in parallel on a vehicle floor (not shown). The slide rail assemblies 16 may be positioned such that the distance therebetween is substantially identical to the distance between the frame elements 12 of the cushion frame 10. Each of the slide rail assemblies 16 may include an upper rail 16A and a lower rail 16B. The lower rail 16B may be affixed to the vehicle floor. The upper rail 16A slidably engages the affixed lower rail 16B. In addition, a bracket 17 may upwardly project from and extend along the upper rail 16A. The lift arms 18, 19 pivotally attached to the frame elements 12 are pivotally attached to the respective ends of the bracket 17. Thus, the cushion frame 10 is operatively or slidably connected to the slide rail assemblies 16.

The cushion frame 10 can be moved back and forth by sliding the upper rail 16A back and forth along the lower rail 16B. Therefore, the position of the seat cushion can be adjusted back and forth by sliding the upper rail 16A along the lower rail 16B. In addition, the cushion frame 10 can be moved up and down by pivoting the lift arms 18, 19 up and down. Therefore, the position of the seat cushion can also be adjusted up and down by pivoting the lift arms 18, 19 up and down.

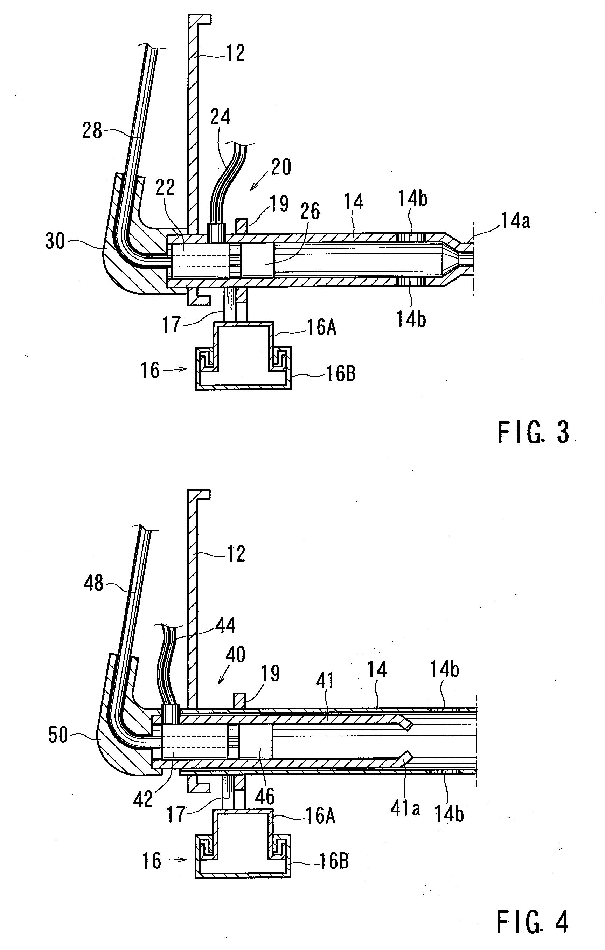

As shown in FIGS. 1 and 3, the vehicle seat of this embodiment preferably includes first and second seatbelt pretensioning devices 20 (one of which is shown in FIG. 3). The seatbelt pretensioning devices 20 may preferably be positioned adjacent to the respective ends of the connector member 14. Each seatbelt pretensioning device 20 may preferably include a drive force generating means (or gas generator) 22 and a movable member (or piston) 26. A lead wire 28 is connected to the piston 26. The gas generator 22 and the piston 26 are received within a cavity of the connector member 14 such that the gas generator 22 is positioned outside the piston 26. As will be appreciated, in this embodiment, the connector member 14 of the cushion frame 10 may act as an actuator cylinder. As best shown in FIG. 1, the connector member 14 may include a central narrowed or flattened portion 14a. The narrowed portion 14a may function as a stopper for the piston 26. That is, the narrowed portion 14a may prevent the piston 26 from excessively moving within the cavity of the connector member 14. Further, the connector member 14 may preferably include a plurality of gas relieving holes 14b that are positioned adjacent to the narrowed portion 14a. In addition, the gas generator 22 is electrically connected to an impact sensor (not shown) via an electric wire 24, so that a sensor signal will be transmitted to the gas generator 22 when the vehicle is subjected to an impact. As will be appreciated, the gas generator 22 may be actuated by the signal, thereby generating high pressure gas within the connector member 14.

First and second L-shaped guide caps 30 may be fixedly attached to the respective ends of the connector member 14. Each guide cap 30 may preferably include a through bore and the lead wire 28 of the piston 26 may pass through the through bore. As shown in FIG. 1, the lead wires 28 of the pistons 26 are respectively connected to a seatbelt buckle 32 and a seatbelt anchor 34 (seatbelt retainer members). The seatbelt buckle 32 and the seatbelt anchor 34 are movably coupled or linked to substantial portions of a seatbelt 9 in order to retain or hold the seatbelt 9. As will be appreciated, the seatbelt buckle 32 and the seatbelt anchor 34 are preferably positioned such that the seatbelt 9 can support the waist of the occupant of the seat

According to the vehicle seat of this embodiment, when the vehicle is subjected to an impact, the impact sensors sense the impact and sensor signals are transmitted to the gas generators 22 via the electric wires 24. The transmitted sensor signals preferably actuate the gas generators 22, thereby rapidly generating the high pressure gas within the connector member 14. The generated gas may inwardly and oppositely (i.e., toward the central portion of the connector member 14) force the pistons 26 by a suitable stroke length within the cavity of the connector member 14. Thus, the lead wires 28 connected to the pistons 26 are pulled into the cavity of the connector member 14 by a desired distance (wire pull distance), thereby pulling back the seatbelt (not shown) connected to the seatbelt buckle 32 and the seatbelt anchor 34 by a desired distance (seatbelt pull distance). As will be recognized, the piston stroke length preferably corresponds to the wire pull distance as well as the seatbelt pull distance. As a result, a traction force is exerted on the seatbelt. Thus, the seatbelt is tensioned or tightened, so that the restraining force applied to the occupant of the seat is effectively increased. Further, because the narrowed portion 14a may effectively prevent the pistons 26 from excessively inwardly moving within the cavity of the connector member 14, the seatbelt may be prevented from being excessively tensioned or tightened. In addition, because high pressure gas (air) within the cavity may be released from the gas relieving holes 14b when the pistons 26 move, the high pressure gas generated by the gas generators 22 can smoothly move the pistons 26.

Thus, in this embodiment, the existing connector member 14 of the cushion frame 10 is utilized as the actuator cylinder. That is, the gas generator 22 and the piston 26 of the seatbelt pretensioning device 20 are received within the cavity of the existing connector member 14. Therefore, it is not necessary to provide any special (additional) space for positioning the seatbelt pretensioning device 20 around the seat cushion. As a result, design freedom of the vehicle seat is not substantially limited. Furthermore, because two seatbelt pretensioning devices 20 are used in the vehicle seat, the seatbelt can be sufficiently pulled back and effectively tensioned or tightened.

### Second Detailed Representative Embodiment

The second detailed representative embodiment will now described with reference to FIG. 4. Because the second embodiment relates to the first embodiment, only constructions and elements that are different from the first embodiment will be explained in detail. Elements that are the same in the first and second embodiments will be identified by the same reference numerals and detailed description of such elements will be omitted.

In this embodiment, the vehicle seat includes first and second seatbelt pretensioning device 40 (one of which is shown in FIG. 4). Each seatbelt pretensioning devices 40 may preferably include a drive force generating means (or gas generator) 42 and a movable member (or piston) 46. A lead wire 48 is connected to the piston 46. Unlike the seatbelt pretensioning device 20 of the first embodiment, the seatbelt pretensioning device 40 may preferably include a sleeve-shaped actuator cylinder 41 that can be inserted into the cavity of the connector member 14. The gas generator 42 and the piston 46 are received within the actuator cylinder 41. The gas generator 42 and the piston 46 may preferably be positioned adjacent to one end of the actuator cylinder 41. As will be appreciated, the piston 46 may preferably be positioned inside the gas generator 42, which is disposed within the actuator cylinder 41. The other end of the actuator cylinder 41 may preferably include a narrowed or squeezed portion 41a. As will be recognized, the narrowed portion 41a may function as a stopper. That is, the narrowed portion 41a may prevent the piston 46 from excessively moving within the actuator cylinder 41. In addition, similar to the gas generator 22 of the first embodiment, the gas generator 42 is electrically connected to an impact sensor (not shown) via an electric wire 44. Further, unlike the first embodiment, the connector member 14 does not include a centrally narrowed of flattened portion.

The actuator cylinder 41 contains the gas generator 42 and the piston 46 and is inserted into the cavity of the connector member 14. One end of the actuator cylinder 41 may preferably be positioned so as to slightly project from the connector member 14, thereby defining a projected end portion. An L-shaped guide cap 50 is fixedly attached to the projected end portion of the actuator cylinder 41. Similar to the guide cap 30 of the first embodiment, the guide cap 50 may preferably include a through bore, and the lead wire 48 of the piston 46 passes through the through bore.

According to the vehicle seat of this embodiment, when the vehicle is subjected to an impact, the impact sensors sense the impact, so that sensor signals are transmitted to the gas generators 42 via the electric wires 44. The transmitted sensor signals preferably actuate the gas generators 42, thereby rapidly generating high pressure gas within the actuator cylinders 41. The generated gas may inwardly move the pistons 46 by a desired stroke length within the actuator cylinders 41. Thus, the lead wires 48 connected to the pistons 46 will be pulled into the actuator cylinders 41 by a desired distance, thereby pulling back the seatbelt connected thereto by a desired distance. As a result, similar to the first embodiment, a traction force is exerted on the seatbelt. Thus, the seatbelt is tensioned or tightened, so that the restraining applied to the occupant of the seat is effectively increased.

Thus, in this embodiment, the first and second seatbelt pretensioning devices 40 are received within the cavity of the existing connector member 14. Therefore, it is not necessary to provide any special (additional) space for the seatbelt pretensioning device 40 around the seat cushion. In addition, because the seatbelt pretensioning device 40 provides the gas generator 42 and the piston 46 within the special actuator cylinder 41, the seatbelt pretensioning device 40 can be pre-assembled as a unit before it is incorporated into the connector member 14 of the cushion frame 10. Such a pre-assembled seatbelt pretensioning device 40 can be easily handed.

Various changes and modifications may be made to the representative embodiments without departing from the scope of the present invention. For example, although two seatbelt pretensioning devices are used in the first and second embodiments, a single seatbelt pretensioning device can be used, if desired.

Further, the seatbelt pretensioning device is not limited to the representative embodiments. For example, the seatbelt pretensioning device may be a different type of device that includes a compressed coil spring (i.e., another representative drive force generating means), a slide block (i.e., another representative movable member) and a triggering mechanism. In such a seatbelt pretensioning device, when the vehicle is subjected to an impact, the triggering mechanism is actuated and the coil spring will expand. As a result, the slide block is moved (biased) by the elastic spring force of the coil spring, so that the seatbelt is pulled back.

Moreover, although the seatbelt pretensioning devices are preferably incorporated into the connector member of the cushion frame, such devices also may be incorporated into the frame elements of the cushion frame. Naturally, in such a case, the frame element may preferably be substituted a cylindrical member for the plate-shaped member.

Representative examples of the present teachings have been described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the foregoing detail description may not be necessary to practice the invention in the broadest sense, and are instead taught merely to particularly describe detailed representative examples of the invention. Moreover, the various features taught in this specification may be combined in ways that are not specifically enumerated in order to obtain additional useful embodiments of the present teachings.

## Claims

1. A vehicle seat comprising:
a cushion frame (10) having a pair of frame elements (12) and a cylindrical connector member (14) that interconnects the frame elements, wherein a cavity is defined within the connector member, and
at least one seatbelt pretensioning device (20, 40) for exerting a traction force on a seatbelt when the vehicle is subjected to an impact, the pretensioning device comprising a drive force generating means (22, 42) and a movable member (26, 46),
wherein the drive force generating means and the movable member are received within the cavity of the connector member, and the movable member is arranged and constructed to move along the connector member when the drive force generating means is actuated.

2. A vehicle seat as defined in claim 1, wherein the connector member extends in the crosswise direction of the vehicle seat, the movable member is arranged and constructed to move toward the central portion of the connector member when the drive force generating means is actuated.

3. A vehicle seat as defined in claim 2, wherein the movable member is arranged and constructed to pull one end of the seatbelt when the movable member moves toward the central portion of the connector member.

4. A vehicle seat as defined in claim 3, wherein the movable member is coupled to a seatbelt retainer member, thereby pulling the seatbelt retainer member when the movable member moves toward the central portion of the connector member.

5. A vehicle seat as defined in any of claims 1-4, wherein the drive force generating means comprises a gas generator that can generate high pressure gas and the movable member comprises a piston that can move along the connector member, and wherein the piston is arranged and constructed to move toward the central portion of the connector member when the high pressure gas is generated by the gas generator.

6. A vehicle seat as defined in claim 1, wherein the at least one seatbelt pretensioning device comprises a pair of seatbelt pretensioning devices that are positioned adjacent to respective ends of the connector member, and wherein the connector member extends in the crosswise direction of the vehicle seat, the movable members are arranged and constructed to oppositely move toward the central portion of the connector member when the drive force generating means are actuated.

7. A vehicle seat as defined in claim 6, wherein respective seatbelt pretensioning devices has the same performance.

8. A vehicle seat as defined in claim 7, wherein respective ends of the seatbelt are retained by seatbelt retainer members that are positioned on both sides of the seat and the seatbelt retainer members are positioned such that the seatbelt can support the waist of the occupant of the seat, and wherein the movable members are arranged and constructed to pull the seatbelt retainer members when the movable members moves oppositely toward the central portion of the connector member.

9. A vehicle seat as defined in claim 8, wherein the movable members are coupled to the seatbelt retainer members, thereby pulling the seatbelt retainer members in opposite directions when the movable members move oppositely toward the central portion of the connector member.

10. A vehicle seat as defined in any of claims 1-9, wherein the seatbelt pretensioning device further comprises an additional actuator cylinder (41) that is disposed within the cavity of the connector member, and wherein the drive force generating means and the movable member are received within the actuator cylinder.

11. A vehicle seat as defined in any of claims 1-10, wherein the connector member is positioned adjacent to the rear ends of the frame elements.
